# EUROPEAN PATENT SPECIFICATION

(11) **EP 3 016 533 B1**
(45) Date of publication and mention of the grant of the patent: **30.10.2019**
(21) Application number: 14744290.9
(22) Date of filing: 04.07.2014
(51) Int. Cl.: A24F 47/00, C09K 5/06

(54) **INHALATION DEVICE COMPRISING SODIUM ACETATE TRIHYDRATE FORMULATIONS**
INHALATIONSAPPARAT UMFASSEND NATRIUMACETAT-TRIHYDRAT-FORMULIERUNGEN
DISPOSITIF D'INHALATION COMPRENANT FORMULATIONS DE TRIHYDRATE D'ACÉTATE DE SODIUM

(30) Priority: 05.07.2013 GB 201312077
(43) Date of publication of application: 11.05.2016
(73) Proprietor: British American Tobacco (Investments) Ltd, London, WC2R 3LA (GB)
(72) Inventor: HARDING, Nick, London Greater London SW1W 9SR (GB); PEARSON, Philip, London Greater London SW1W 9SR (GB); ROBINSON, Joe, London Greater London SW1W 9SR (GB); MOR, Ori, London Greater London N6 6NS (GB); LAWSON, Michael, London Greater London WC1X 9LX (GB)
(74) Representative: EIP
(86) International application number: PCT/EP2014/064365
(87) International publication number: WO 2015/001101

(56) References cited:
- CN-A- 102 212 340
- CN-A- 102 604 599
- DE-A1-102010 046 482
- JP-A- 2006 219 557
- US-A- 4 412 930
- US-A1- 2011 290 266
- US-A1- 2012 132 196

## Description

### Field

The present invention relates to an inhalation device comprising formulations comprising sodium acetate trihydrate (SAT) and other components.

### Background

Sodium acetate trihydrate (SAT) is a phase change material which emits heat when the supercooled liquid form crystallises. This material may be used as a heat source in a variety of products.

US 2011/290266 discloses a smoke-free cigarette with a composition comprising sodium acetate trihydrate and a stabilizer as a heat source.

CN 102212340 discloses a composition comprising water, nonaqueous sodium acetate and carboxyl methyl cellulose.

CN 102604599 discloses a composition comprising sodium acetate trihydrate, water and hydrolysis maleic anhydride as a properties-correcting agent.

DE 10 2010 046482 discloses a heat exchanger comprising a composition with a reduced susceptibility to spontaneous crystallization. This composition comprises a solution of sodium acetate trihydrate and carboxymethyl cellulose.

US 2012/132196 discloses a solar thermal collector comprising a composition comprising sodium acetate trihydrate and a weak solution of carboxymethyl cellulose.

US 4412930 discloses a heat-storing composition that can be placed in an apparatus, comprising acetic acid, sodium acetate and potassium acetate.

### Summary

The invention provides an inhalation device according to claim 1 or claim 13, comprising formulations comprising SAT and other components.

In some embodiments the formulation has a peak temperature of from 40 to 60°C upon crystallisation.

The formulation exhibits increased stability relative to a formulation consisting of the same SAT upon exposure to the mechanical forces exerted by one or more stability tests. Such formulations may, in some embodiments, also have a peak temperature of from 40 to 60°C upon crystallisation.

The kinetic inhibitor is an additive that acts to inhibit nucleation. The kinetic inhibitor is selected from the group consisting of: sodium carboxymethyl cellulose; gelatine; ethyl cellulose; polyethylene glycol; xanthan gum; glycerol; urea; polysorbate 20; polysorbate 80; polyacrylic acid; sodium pyrophosphate; polyacrylamide; pullulan; poly(vinyl alcohol); and poly(vinyl acetate).

In some embodiments, the kinetic inhibitor is sodium carboxymethyl cellulose, included in an amount of from 0.01% to 1% by weight of the formulation.

In some embodiments, the solvent is selected from the group consisting of: ethylene glycol; propylene glycol; ethanol; 1-propanol; methanol; water; and acetone.

In some embodiments, the solvent comprises water, included in the formulation in an amount of from 10 to 40% by weight based on the weight of the SAT.

In some embodiments, the solvent comprises ethylene glycol, included in the formulation in an amount of from about 1 to about 5% by weight of the formulation.

In some embodiments, the formulation may comprise: from 70% to 90% SAT; from 0.01% to 0.1% sodium carboxymethyl cellulose; from 5% to 20% water; and from 3% to 9% by weight ethylene glycol, all by weight of the total formulation.

In some embodiments, the formulation may comprise: from 70% to 90% SAT; from 0.025% to 0.1% sodium carboxymethyl cellulose; from 10% to 20% water; and from 1% to 10% by weight potassium acetate, all by weight of the total formulation.

In some embodiments, the heatable material comprises nicotine.

### Brief Description of Drawings

For the purposes of example only, embodiments of the invention are described below with reference to the accompanying drawings, in which:
Figure 1 is a graph showing the peak phase change temperatures for formulations according to certain embodiments of the invention.
Figure 2 is a graph showing the peak phase change temperatures for formulations including varying amounts of water.
Figure 3 is a graph showing the environmental chamber protocol for so-called "environmental test" for formulations described herein.
Figure 4 is a schematic illustration of an inhalation device including a heat source which is a formulation according to embodiments of the present invention.
Figure 5 is a schematic illustration of the experimental set up for a so-called "drop test" as described herein.

### Detailed Description

The phase change material sodium acetate trihydrate (CH₃COONa·3H₂O) has been utilized in hand warmer devices and the like. However, these devices can behave unpredictably, and will often self-initiate during transportation. This unwanted activation of the heat source material in hand warmers and other reusable products is not considered to be particularly problematic, however, as such devices are intended to be repeatedly regenerated by the user anyway, for example by placing the product in boiling water for a short period of time. However, not all types of devices are capable of being regenerated and for such devices the unintentional activation of the phase change material is to be avoided as far as possible.

SAT crystals melt at approximately 58°C, dissolving in their water of crystallization. Under ideal conditions, this solution is capable of cooling to room temperature; i.e. supercooling, without solidifying. When a critical nucleus is formed the solution crystallizes into solid sodium acetate trihydrate, releasing the latent heat of fusion which is about 264-289 kJ/kg.

The SAT formulations comprised in the devices of the current invention comprise additives which are able to enhance the stability of the formulations when at room temperature whilst maintaining the temperature of the phase change reaction as far as possible. In some embodiments, it may be desirable to use additives which are: (i) of low toxicity; (ii) readily available; and/or (iii) low cost.

In some embodiments, the formulations exhibit increased stability relative to a formulation consisting of the same SAT and/or are stable upon exposure to the mechanical forces exerted by one or more stability tests as described herein and they have a peak temperature upon crystallisation which is no more than about 20% lower, no more than about 15% lower, no more than about 10% lower, no more than about 5% lower, no more than about 2% lower or is no lower than the peak temperature upon crystallisation of a formulation consisting of the same SAT.

In some embodiments, the formulations exhibit increased stability relative to a formulation consisting of the same SAT and/or are stable upon exposure to the mechanical forces exerted by one or more stability tests as described herein and they have a total thermal output upon crystallisation which is no more than about 20% lower, no more than about 15% lower, no more than about 10% lower, no more than about 5% lower, no more than about 2% lower or is no lower than the total thermal output upon crystallisation of a formulation consisting essentially of the same SAT. As used herein, the total thermal output is the total thermal energy made available as a result of the crystallisation of a formulation.

### Stability

Formulations consisting essentially only of SAT have been found to have poor stability at room temperature when subjected to mechanical stresses such as those encountered during normal handling and transportation associated with packaging and logistical operations of consumer products.

It is possible to simulate such "normal" mechanical stresses using tests that are designed to simulate the normal stresses described above. ASTM-D4169 describes the standard practice for performance testing of shipping containers and systems. It provides a guide for the evaluation of shipping units in accordance with a uniform system, using established test methods at levels representative of those occurring in actual distribution. The tests should be performed sequentially on the same containers in the order given.

The formulations exhibit increased stability relative to a formulation consisting of the same SAT. As used herein, increased stability means that the formulations exhibit increased stability in their supercooled liquid state compared to the stability of a formulation consisting essentially only of the same SAT. In particular, this can mean that the stabilized formulations in their supercooled liquid state are less likely to spontaneously crystallise and/or that they are less likely to crystallise as a result of exposure to the mechanical forces exerted by one or more stability tests as described herein.

As used herein, a formulation is defined as being stable if no more than 20% of the tested samples crystallise as a result of exposure to the mechanical forces exerted by one or more stability tests as described herein. In some embodiments, a formulation is defined as being stable if no more than 15% of the tested samples crystallise. In some embodiments, the formulations are stable if no more than 10%, 5%, 2% or 1% of the tested samples crystallise.

Details of stability tests used herein, namely of the "drop test" and the "environmental test" are set out below. The stability of the formulations described herein is preferably assessed using one or more of these tests.

### Thermal Output

When measured using standard laboratory apparatus and at ambient temperature (between 20 and 25°C), some embodiments of the SAT formulations reach a peak temperature of from about 35 to about 60°C upon crystallization. In some embodiments, the formulations reach a temperature of from about 40 to about 60°C, from about 45 to about 58°C, from about 45 to about 55°C, or from about 50 to about 55°C upon crystallization.

In some embodiments, the formulations have a peak temperature upon crystallisation which is no more than about 20% lower, no more than about 10% lower, no more than about 5% lower, no more than about 2% lower or is no lower than the peak temperature upon crystallisation of a formulation consisting essentially of the same SAT (but essentially no other components).

The formulations reaching these temperatures upon crystallisation are stabilized.

In some embodiments, the peak temperature and/or the thermal output of a sample of a formulation is measured at ambient temperature (between 20 and 25°C) by seeding crystallization of 10 cm³ of the formulation in a 15 cm³ centrifuge tube with a standard 'K-Type' thermocouple and logging the thermal output with a suitable datalogger device. Example experimental apparatus for these measurements may include centrifuge tubes obtained from Sigma-Aldrich, K-Type thermocouples obtained from RS and a Picologger datalogger device obtained from Omega.co.uk. The total thermal output may be measured in the same way, using a calorimeter, such as a reaction calorimeter, rather than the thermocouple temperature sensor.

In some embodiments, the formulations have a total thermal output upon crystallisation which is no more than about 20% lower, no more than about 15% lower, no more than about 10% lower, no more than about 5% lower, no more than about 2% lower, or is not lower or significantly lower than the thermal output upon crystallisation of a formulation consisting essentially of the same SAT (but essentially no other components).

In some embodiments, the formulation is capable of heating the heatable material to a temperature of from about 40 to about 60°C, from about 45 to about 55°C, or from about 50 to about 55°C upon crystallization. In some embodiments, the heatable material comprises tobacco, for example cut, shredded or ground tobacco.

### Sodium Acetate Trihydrate

In some embodiments, the SAT used in the formulations has a purity of at least 99.0%, for example as supplied by Sigma Aldrich under the product line name BioXtra. In some embodiments, the SAT used in the formulations has a purity of at least 99.5%.

In some embodiments, the formulations comprise SAT comprising no more than 0.1% insoluble impurities (equivalent to an insoluble impurities level of 100 ppm). In some embodiments, the SAT comprises no insoluble impurities.

### Kinetic Inhibitor

The SAT formulations according to claim 1 include a kinetic inhibitor. Such an additive is included in the formulations in order to reduce the likelihood of spontaneous or unintentional phase change, i.e. unwanted phase change which is not actively triggered (for example by seeding). Unintentional phase change can be caused by mechanical forces. Whilst not wishing to be bound by any particular theory on how these kinetic inhibitors work, it is believed that they inhibit phase change by slowing the kinetics of the SAT system.

In some embodiments, the kinetic inhibitor may be water soluble. In some embodiments, the kinetic inhibitor may be a polymer, such as a polysaccharide or a polysaccharide derivative. Suitable polysaccharides may include natural or synthetic gums.

In some embodiments, the kinetic inhibitor may be an additive that normally acts as or is described as a thickening agent, gelling agent, emulsifying agent, stabilizer or binding agent.

In some embodiments, the kinetic inhibitor is included in an amount that does not substantially alter the viscosity of the formulation (as compared to the viscosity of the formulation prior to addition of the kinetic inhibitor). In some embodiments, this may be despite the fact that the kinetic inhibitor is one which will increase the viscosity of a liquid formulation if it is added in a sufficient quantity.

The kinetic inhibitor is selected from the group consisting of: sodium carboxymethyl cellulose (CMC); gelatine; ethyl cellulose; polyethylene glycol; xanthan gum; glycerol; urea; polysorbate 20; polysorbate 80; polyacrylic acid; sodium pyrophosphate; polyacrylamide; pullulan; poly(vinyl alcohol); and poly(vinyl acetate).

In some embodiments which may be preferred in certain circumstances, the kinetic inhibitor is sodium carboxymethyl cellulose (CMC). CMC has been shown to be an additive capable of both increasing the stability of supercooled SAT without adversely affecting the thermal output observed during crystallization.

Whilst not wishing to be bound by any particular theory, it is believed that when CMC is exposed to water, the CMC hydrates by forming a thin layered film of water around each chain. This hydrated CMC system hinders the kinetics of the SAT solution, and hence slows the rate at which nuclei form and therefore the probability of a critical nucleus forming and initiating crystallization.

In some embodiments, the CMC has an average molecular weight within the range of about 50,000 to about 150,000 and optionally an average molecular weight of about 90,000.

In some embodiments, the kinetic inhibitor is added to the formulation in the form of an aqueous solution. For example, where the kinetic inhibitor is CMC, a solution of 0.5% (by weight) CMC in water may be prepared and added to the SAT and any other components of the formulation.

A volume of the pre-mixed aqueous solution of kinetic inhibitor, such as CMC, may be added to the formulation comprising SAT and optionally other components to provide the desired kinetic inhibitor concentration and/or effect.

Water, either from the aqueous solution of the kinetic inhibitor (such as CMC), or included separately as a solvent (as discussed below), dilutes the SAT. Not wishing to be bound by any particular theory, it is believed that this may have the effect of reducing the supersaturation and prevents formation of anhydrous sodium acetate crystals, slowing the rate at which nuclei form and therefore the probability of a critical nucleus forming.

In some embodiments, CMC may be included in the amount of from about 0.01% to about 1% by weight of the SAT in the formulation. In some embodiments, CMC may be included in an amount of from about 0.05% to about 0.2% by weight of the SAT in the formulation.

In some embodiments, CMC may be included in the amount of from about 0.01% to about 0.1% by weight of the total formulation. In some embodiments, CMC may be included in an amount of from about 0.025% to about 0.1% by weight of the total formulation.

### Solvents

The SAT formulations may include at least one solvent. Whilst not wishing to be bound by any particular theory, solvents may enhance the dissolution of anhydrous SAT crystals that may remain in the formulation following melting or which may form upon storage of the formulation at a temperature below the melting point of SAT. In addition or alternatively, it is believed that some solvents may disrupt the hydrogen bonds between water molecules in the SAT formulation, thereby increasing the energy required for a critical nucleus to form and thereby reducing the probability of the phase change being initiated spontaneously.

In some embodiments, the solvent may be selected from the group consisting of: ethylene glycol; propylene glycol; ethanol; 1-propanol; methanol; water; and acetone.

In some embodiments, the solvent may comprise water. In alternative embodiments, the solvent is not water.

The amount of solvent included in the SAT formulation may be significant as this has a complex effect on the stability of the formulation.

The addition of water as a solvent to the SAT in an amount from 10% to 40% by weight based on the weight of the SAT has been shown to result in increased stability in the supercooled state. However, with each additional 10% water added, approximately 5°C was lost from the peak temperature upon phase change.

The stability afforded to the supercooled SAT formulation by the addition of water is balanced with a reduction in peak temperature upon crystallisation. As a result, the peak temperature achieved may be customized according to requirements. Additional stability may be afforded by other components added to the formulations, for example the kinetic inhibitor and other solvents.

In some embodiments, the formulations comprise at least about 1%, at least about 5% or at least about 10% by weight of water based upon the weight of SAT, and up to about 40%, or up to about 25%, or up to about 20% by weight of water based upon the weight of SAT. In some embodiments, the amount of water is from about 5 to about 20%, or from about 10 to about 20% by weight water based on the weight of SAT, or is about 15%.

In some embodiments, the formulations comprise at least about 1%, at least about 5% or at least about 10% by weight of water based upon the weight of the total formulation, and up to about 40%, or up to about 25%, or up to about 20% by weight of water based upon the weight of the total formulation. In some embodiments, the amount of water is from about 5 to about 20%, from about 10 to about 20% or from about 12 to about 18% by weight water based on the weight of the total formulation.

In the case of some solvents, increasing the amount of solvent included in the SAT formulations tends to result in increased stability of the formulation until a threshold amount is reached above which additional solvent can lead to a reduction in stability.

In some embodiments, the solvent is ethylene glycol. In some embodiments, ethylene glycol may be included in the formulations in an amount from about 0.5 to about 7.5% by weight of the formulation. In some embodiments, ethylene glycol may be included in an amount of from about 2.5% to about 4.5%, or in an amount of from about 3% to about 4% by weight.

In some embodiments, the formulation may comprise: SAT; from about 10% to about 20% by weight based on the weight of SAT of a 0.1 to 1% by weight aqueous solution of sodium carboxymethyl cellulose; and from about 1 to about 5% by weight ethylene glycol based on the weight of the SAT and sodium carboxymethyl cellulose solution.

In some embodiments, the formulation may comprise: from about 70% to about 90% SAT; from about 0.01% to about 0.1% sodium carboxymethyl cellulose; from about 5% to about 10% water; and from about 3% to about 9% by weight ethylene glycol, all by weight of the total formulation.

In some embodiments, these formulations comprise CMC having a molecular weight of about 90,000. These amounts of kinetic inhibitor and solvent provide the SAT formulations with increased stability and a peak temperature upon crystallisation within the range of from about 40 to about 60°C, or of about 45 to about 55°C.

### Potassium acetate

In some embodiments, the formulation may comprise a cation which is larger than the sodium cation. In some embodiments, the formulation may comprise a potassium cation. In some embodiments, the formulation may comprise a source of the potassium cation, such as potassium acetate. The formulation according to claim 13 comprises potassium acetate.

Whilst not wishing to be bound by any particular theory, it is believed that a source of a large cation, such as potassium acetate, adds the large cation to the solution with similar properties to the sodium within the SAT. This has two effects: i) the large cation, such as potassium, provides competition to the sodium cation when forming crystal structures; and ii) the size of the large cation, such as potassium, disrupts the initiation of SAT crystal structure formation. These effects reduce the probability of a phase change and thereby enhance the stability of the SAT formulations. Whilst not wishing to be bound by any particular theory, it is believed that the large cation may slow, and even halt, the progression of crystallisation once it has started, thereby enhancing stability of the formulation.

The addition of potassium acetate to the SAT formulation at a ratio of 10-15% (moles potassium acetate : SAT) confers stability to the formulation. In some embodiments, the formulation comprises 8-25% (moles potassium acetate : SAT).

In some embodiments, the SAT formulations comprising potassium acetate do not include ethylene glycol. In some embodiments, the SAT formulations comprising potassium acetate comprise no more than 15% water.

In some embodiments, the formulation comprises: SAT, water, CMC and potassium acetate. In some embodiments, the formulations comprise: from about 5% to about 20% by weight water based on the SAT by weight; from about 0.01% to about 1% by weight CMC based on the SAT by weight; and from about 5% to about 25% potassium acetate by weight based on the combination of SAT and CMC by weight.

In some embodiments, the formulation may comprise: from about 70% to about 90% SAT; from about 0.05% to about 0.15% sodium carboxymethyl cellulose; from about 10% to about 20% water; and from about 1% to about 6% by weight potassium acetate, all by weight of the total formulation.

In some embodiments, these formulations comprise CMC having a molecular weight of about 90,000. These amounts of kinetic inhibitor and solvent provide the SAT formulations with increased stability and a peak temperature upon crystallisation within the range of from about 40 to about 60°C, or of about 45 to about 55°C.

### pH Modifiers

In some embodiments, the formulations may further include a pH modifier to adjust the pH of the formulation to a desired value or range. In some embodiments, the pH modifier may be an acid, such as acetic acid or a mineral acid, which is added in an amount to adjust the pH of the formulation to a neutral or acidic pH. In some embodiments, a buffer may be added to or included in the formulation, to modify and maintain the pH of the formulation at a desired value or range. Suitable buffers include an acetate buffer comprising a mixture of sodium acetate and acetic acid (buffering at pH 5.2), or a mixture of potassium acetate and acetic acid.

Where a buffer comprises sodium acetate, this may be formed by adding sodium acetate and acetic acid to the formulation or it may be formed by adding just acetic acid to the sodium acetate already present in the formulation.

### Other Additives

In some embodiments, the formulations may include other additives, for example to provide the formulation with a desired appearance.

In some embodiments, the formulations may include one or more food dyes. In some embodiments, these food dyes may be approved by the FDA or an equivalent office or agency. Suitable dyes include, for example: E129 Allura Red AC Granular (Food Red 17 CI 16035); E110 Sunset Yellow Lake 20-24 (Food Yellow 3:1 CI 15985:1); E102 Tartrazine Granular (Food Yellow 4 CI 19140); E133 Brilliant Blue FCF Granular (Food Blue 2 CI 42090); E133 Brilliant Blue FCF Lake 10-14 (Food Blue 2:1 CI 42090:1); E132 Indigotine (Indigo Carmine) (Food Blue 1 CI 73015); E127 Erythrosine Granular (Food Red 14 CI 45430) (which may be procured from Fastcolours.co.uk). Thus, in some embodiments, a formulation comprising SAT, potassium acetate and CMC may further comprise one or more dyes was used to give the formulation a desired colour.

In some embodiments, the fluorescent formulations may produced by including a fluorescent additive in the formulation. In some embodiments, the formulation comprises Fluorescein (CAS-No. 2321-07-5, which may be procured from Sigma-Aldrich).

In some embodiments, thermochromic formulations may be produced by adding a thermochromic additive to the formulations. Such additives may comprise a dispersion of thermochromic microcapsules in an aqueous medium (examples of which may obtained as "ChromaZone® slurry from LCR Hallcrest, UK).

These additives may be added to any of the formulations discussed herein.

### Methods of Preparing Formulations (not part of the current invention)

In some embodiments, the formulations described above are prepared by combining the components.

In some embodiments, the kinetic inhibitor, such as CMC, may be added to the other components of the formulation in the form of an aqueous solution.

In some embodiments, the cooling may be gradual whilst in other embodiments the cooling may be rapid. In some embodiments, the cooling may comprise air cooling. In some embodiments, the cooling may comprise plunging the formulation into cooled water.

In some embodiments, the formulations are heated to at least about 60°C, at least about 70°C, at least about 80°C, at least about 90°C or at least about 100°C. In some embodiments, the formulations are heated to a temperature which does not exceed 125°C, does not exceed 120°C, 115°C, 110°C or does not exceed 105°C. In some embodiments, the formulation is held at the elevated temperature for at least about 30 minutes, at least about 1 hour, at least about 2 hours, at least about 3 hours, at least about 4 hours, at least about 6 hours, at least about 8 hours, at least about 12 hours, at least about 18 hours, at least about 24 hours, at least about 30 hours, at least about 36 hours, or at least about 42 hours. In some embodiments, the formulation should be held at the elevated temperature for no more than about 72 hours, no more than about 60 hours or no more than about 54 hours.

### Products

The formulation acts as a heat source in the inhalation device of the current invention, and emits heat upon use of the device. In some embodiments, the formulation will emit heat upon actuation of the apparatus by the user. In some embodiments, the formulation heats to a peak temperature of from about 40 to about 60°C, or from about 45 to about 55°C.

The apparatus is an inhalation device and the composition is a heat source which heats a heatable material. In some embodiments, the heatable material may, for example, comprise a substance to be inhaled. For example, in some specific embodiments, the substance to be inhaled is nicotine and/or the heatable material is a tobacco material. The tobacco material may, in some embodiments, be tobacco, a tobacco derivative or a tobacco extract.

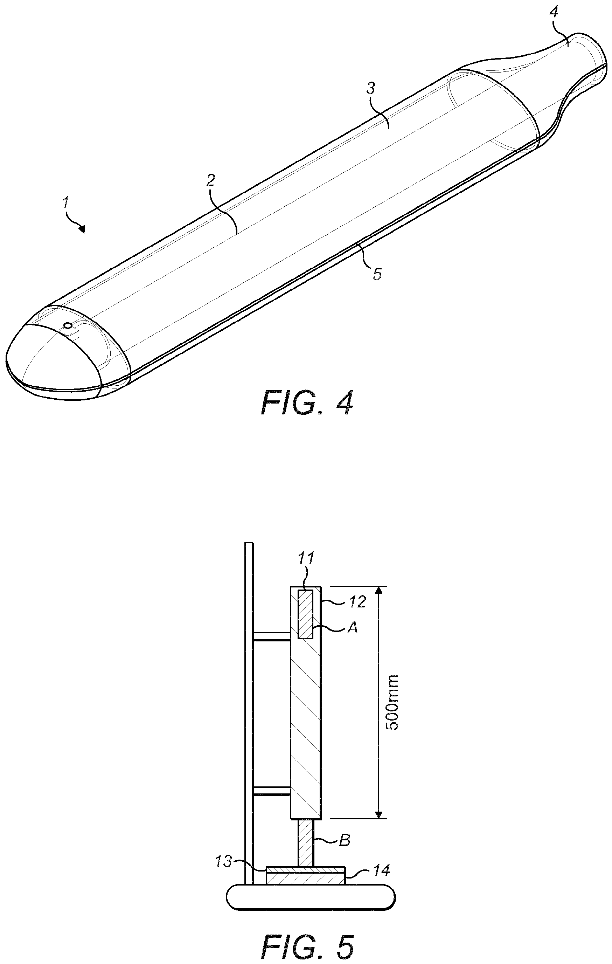

In some embodiments, as illustrated in Figure 4, such an inhalation device 1 comprises a housing 5 within which the heat source material 3 is held in a heat source chamber, and a heatable material 2 is held in a separate heating chamber, the heat source chamber and the heating chamber being arranged to allow transfer of heat from the heat source chamber to the heatable material, so that at least one component of the heatable material may be volatilised. In some embodiments, the inhalation device additionally includes a mouthpiece 4 through which the volatilised component(s) may be inhaled.

In some embodiments, a formulation is defined as being stable if no more than 50% of the tested devices comprising the formulation are triggered, i.e. the formulation crystallises, as a result of exposure of the devices to the mechanical stress exerted by the stability tests described herein. In some embodiments, the stability of the formulations is such that no more than 25% of the tested devices are triggered. In some embodiments, the stability of the formulations is such that no more than 15%, 10%, 5% or 1% of the tested devices are triggered.

In some embodiments, a formulation is defined as being stable if no more than 50% of the tested devices comprising the formulation are triggered, i.e. the formulation crystallises, as a result of exposure of the devices to the mechanical stress exerted by the "drop test" described herein.

### Experimental

A number of formulations were prepared and tested, to establish the effect of various additives and combinations of additives on the stability of sodium acetate trihydrate (SAT).

### Stability Testing

The stability of the supercooled liquid formulations may be tested by exposing the formulations to various types of mechanical forces.

Simple SAT formulations which do not comprise the kinetic inhibitor and solvent according to the present invention will generally fail the tests described below, in that over 50% of the test samples will crystallise as a result of exposure to the mechanical stress. In contrast, an SAT formulation is considered to be stabilized or to exhibit enhanced stability if no more than 50% and preferably no more than 25% of the test sample crystallise as a result of exposure to the mechanical stress exerted by the tests.

In order to eliminate the effect that the container has on the stability of the SAT formulation in response to mechanical forces, samples should be tested in identical containers. In some embodiments, stability tasting is carried out using 15 cm³ centrifuge tubes. For example, stability tests and thermal output measurements may be carried out using 15 cm³ sterile Corning branded PET centrifuge tubes. Available from Sigma-Aldrich, catalogue number CLS430055-500EA. The volume of the sample and their handling should also be consistent between samples.

A test used to asses the stability of the SAT formulations is the so-called "drop test". In this test, a test article is prepared by transferring a sample of the formulation to be tested into a centrifuge tube. This test article is then dropped ten times from a height of 0.5 m. The apparatus used in the drop test is shown in Figure 5. The test article 11 is dropped from a start position A to an end position B through a card tube 12 (which ensure that the test article remains vertical) onto a 3 mm thick stainless steel sheet 13 mounted upon a wooden block 14. After each drop, the test article 11 should be inspected to check if the PCM has triggered (i.e. to check whether the supercooled liquid formulation has crystallised).

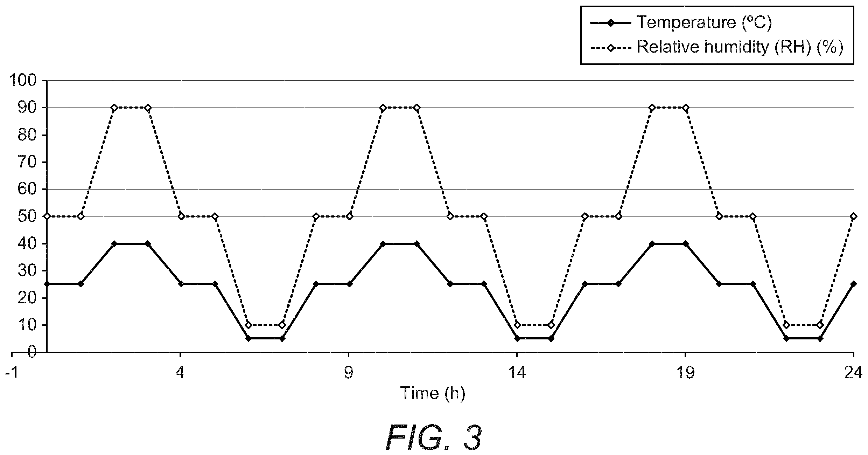

A further test used to asses the stability of the SAT formulations is the so-called "environmental test". In this test, a test article is prepared by transferring a sample of the formulation to be tested into a centrifuge tube. The test articles are subjected to environmental conditions which differ from ambient over a period of 72 hours. The articles are then inspected to see if the PCM has triggered (i.e. to check whether the supercooled liquid formulation has crystallised). Subsequently, the tested sample may be subjected to the previously detailed drop test. The environmental conditions used in the environmental test that differed from ambient were: 40°C, 5°C and 650 mbar. An environment with a variable temperature is used to simulate thermal shock. During this 72 hour test, the environmental temperature is cycled following the pattern: from 5°C to 25°C, to 40°C, to 25°C, to 5°C with 2 hour holds at each temperature, and from 10% to 50%, to 90%, to 50%, to 10% relative humidity with 2 hour holds. This is illustrated in the graph shown in Figure 3.

Various SAT formulations were prepared and tested to ascertain the effect of the kinetic inhibitors and solvents on the stability and thermal output of the formulations.

### Formulation 1

An SAT formulation was prepared comprising a solution of CMC 0.5% w/w in water and ethylene glycol as follows:
∘ SAT (≥ 99.0 %; CAS No. 6131-90-4)
∘ 10% (wt) of 0.5 % (wt) CMC solution in water (Mw ∼ 90K; CAS No. 9004-32-4)
∘ 3.33% ethylene glycol (wt of SAT + CMC solution total) (≥ 99%; CAS No. 107-21-1).

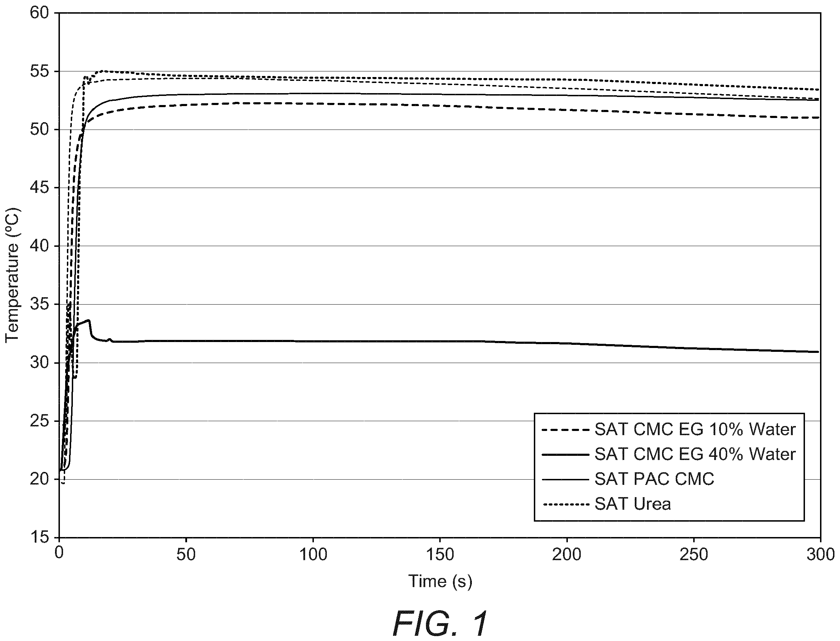

The thermal output of this formulation is shown in Figure 1, demonstrating a peak temperature of about 52°C. Drop tests showed that this formulation exhibited increased stability, with fewer samples failing (i.e. crystallising) than samples of the SAT without the additive.

### Formulation 2

Formulation 2 was prepared as Formulation 1 as set out above but with 40% (wt) of 0.5% (wt) CMC solution in water (instead of 10% (wt)). Some tests suggested that the increase in the water content increased stability but also had the effect of reducing the peak temperature achieved by the formulation upon activation.

The thermal output of this formulation is shown in Figure 1, demonstrating a peak temperature of about 34°C. Drop tests showed that this formulation exhibited increased stability, with fewer samples failing (i.e. crystallising) than samples of the SAT without the additive.

### Formulation 3

An SAT formulation was prepared comprising potassium acetate in addition to CMC and water. The formulation was as follows:
∘ SAT (≥ 99.0%; CAS No. 6131-90-4)
∘ 10% (molar ratio) potassium acetate (≥ 99.0%; CAS No. 127-08-2)
∘ 3.3 moles water per mole of anhydrous potassium acetate
∘ 5% (wt of total mass to here) of 0.5 % (wt) CMC solution in water (Mw ∼ 90K; CAS No. 9004-32-4).

This formulation provided excellent results. The additional water appeared to have less of an impact in this formulation, and it is speculated that this may potentially be due to tetrahydrate forming in equilibrium. The thermal output of this formulation is shown in Figure 1, demonstrating a peak temperature of about 52.5°C. Drop tests showed that this formulation exhibited increased stability, with fewer samples failing (i.e. crystallising) than samples of the SAT without the additive. Indeed, in one iteration of drop testing no samples failed.

### Formulation 4

This formulation was prepared to investigate the use of an acid in the SAT composition. The formulation was as follows:
∘ SAT (≥ 99.0%; CAS No. 6131-90-4)
∘ Upon melting, pH was reduced to 7 using acetic acid (≥ 99.7%; CAS No. 64-19-7)
∘ 10% (wt) of 0.5% (wt) CMC solution in water (Mw ∼ 90K; CAS No. 9004-32-4)
∘ 3.33% ethylene glycol (wt of SAT + CMC solution total) (≥ 99%; CAS No. 107-21-1).

Some tests suggest that reducing the pH from approximately 9.5 to 7 resulted in an increase in stability. This formulation showed very good stability and had a peak temperature of approximately 51.5°C on crystallisation.

### Formulation 5

This formulation was prepared to investigate the effect of using urea in the place of CMC. The formulation was as follows:
∘ SAT (≥ 99.0%; CAS No. 6131-90-4)
∘ 10% (wt) of 5% (wt) urea solution in water (≥ 99.5%; CAS No. 57-13-6)
∘ 3.33% ethylene glycol (wt of SAT + urea solution total) (≥ 99%; CAS No. 107-21-1).

The thermal output of this formulation is shown in Figure 1, demonstrating a peak temperature of about 55°C. Drop tests showed that this formulation exhibited increased stability, with fewer samples failing (i.e. crystallising) than samples of the SAT without the additive.

### Formulation 6

This formulation was prepared to investigate the effect of using polyvinyl acetate (PVA) in the place of CMC. The formulation was as follows:
∘ SAT (≥ 99.0%; CAS No. 6131-90-4)
∘ 10% (wt) of 1% (wt) PVA solution in water (CAS No. 9003-20-7).

Some tests suggest that this formulation had increased stability compared to formulations consisting essentially of only the same SAT, and had a peak temperature of 54.5°C on crystallisation.

### Formulation 7

This formulation was prepared to investigate the effect of using poly(acrylamide) in the place of CMC. The formulation was as follows:
∘ SAT (≥ 99.0%; CAS No. 6131-90-4)
∘ 0.5% (wt) of 10 % (wt) poly(acrylamide) solution in water (CAS No. 9003-05-8).
∘ 3.33% ethylene glycol (wt of SAT + poly(acrylamide) solution total) (≥ 99%; CAS No. 107-21-1)

Some tests suggest that this formulation had increased stability compared to formulations consisting essentially only of the same SAT.

### Formulation 8

An SAT formulation was prepared comprising a solution of CMC 0.5% w/w in water and propylene glycol as follows:
∘ SAT (≥ 99.0 %; CAS No. 6131-90-4)
∘ 10% (wt) of 0.5 % (wt) CMC solution in water (Mw ∼ 90K; CAS No. 9004-32-4)
∘ 3.33% propylene glycol (wt of SAT + CMC solution total) (≥ 99%; CAS No. 57-55-6).

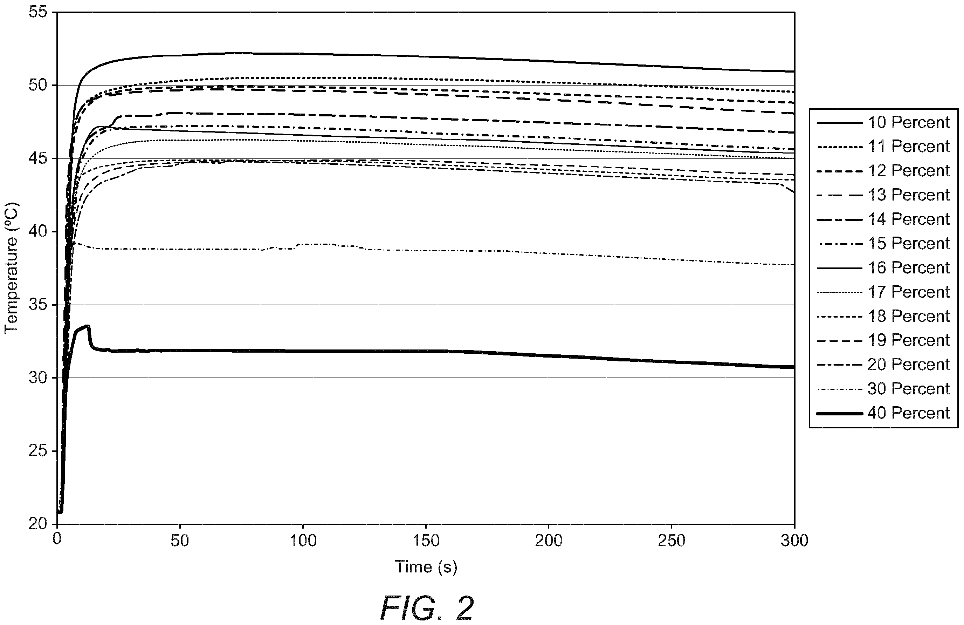

Figure 2 presents data showing that as increasing amounts of water is added to the formulation, the peak temperature upon crystallisation is reduced. The graph shows the temperature curves for variations of Formulation 1 described above, with different amounts of water, expressed as % by weight of SAT. The data shows that the thermal output of some of the formulations according to the invention may be tailored by adjusting the water content.

### 'Relative Stability' Test

In order to investigate the relative stability of SAT formulations stabilised by the addition of kinetic inhibitors and solvents, the following example experiment was conducted. A control formulation of ≥ 99.5 % purity SAT and 5 % (w/w) water was melted, and 6 cm³ aliquots dispensed into 50 sample tubes. A 'stabilised' formulation was prepared with the make up of Formulation 3 described above, and was prepared in the same way as the control. The samples were left to cool overnight (samples that triggered in this period are referred to as triggering upon 'standing') and then subjected to the so called "drop test". These data are summarised in Table 1.

**Table 1**

| **Formulation** | **Samples Triggered upon Standing** | **Samples Triggered upon Handling** | **Samples Triggered During Drop Test** |
|---|---|---|---|
| Control (SAT + 5% water) | 6 / 50 | 44 / 44 | N / A |
| Stabilised Formulation 3 (SAT + PAC + CMC + water) | 1 / 50 | 0 / 49 | 4 / 49 |

The 'stabilised' solution was shown to have a higher level of relative stability in comparison to control SAT formulation. Of those samples that failed the drop test, the sample tubes exhibited cracks caused by the mechanical shock of the test that may have acted as nucleation sites for the PCM formulation.

In order to address various issues and advance the art, the entirety of this disclosure shows by way of illustration various embodiments in which the claimed invention(s) may be practiced and provide for superior formulations, methods and apparatuses. The advantages and features of the disclosure are of a representative sample of embodiments only, and are not exhaustive and/or exclusive. They are presented only to assist in understanding and teach the claimed features. It is to be understood that advantages, embodiments, examples, functions, features, structures, and/or other aspects of the disclosure are not to be considered limitations on the disclosure as defined by the claims and that other embodiments may be utilised and modifications may be made without departing from the scope of the claims. Various embodiments may suitably comprise, consist of, or consist essentially of, various combinations of the disclosed elements, components, features, parts, steps, means, etc.

## Claims

1. An inhalation device comprising a heatable material and a formulation, wherein the formulation is a heat source which heats the heatable material in use;
wherein the formulation comprises sodium acetate trihydrate (SAT), a kinetic inhibitor and a solvent; and
wherein the kinetic inhibitor is selected the group consisting of: sodium carboxymethyl cellulose; gelatine; ethyl cellulose; polyethylene glycol; xanthan gum; glycerol; urea; polysorbate 20; polysorbate 80; polyacrylic acid; sodium pyrophosphate; polyacrylamide; pullulan; poly(vinyl alcohol); and poly(vinyl acetate).

2. An inhalation device as claimed in claim 1, the formulation having a peak temperature of from 40°C to 60°C upon crystallisation.

3. An inhalation device as claimed in either of the preceding claims, wherein the formulation further comprises a cation which is larger than the sodium cation.

4. An inhalation device according to claim 3, wherein the formulation comprises potassium acetate.

5. An inhalation device according to any one of the preceding claims, wherein the formulation exhibits increased stability relative to a formulation consisting of the same SAT upon exposure to the mechanical forces exerted by one or more stability tests.

6. An inhalation device as claimed in any one of the preceding claims, wherein the kinetic inhibitor is an additive that acts to inhibit nucleation.

7. An inhalation device as claimed in any one of the preceding claims, wherein the kinetic inhibitor is sodium carboxymethyl cellulose, included in an amount of from 0.01% to 1% by weight of the formulation.

8. An inhalation device as claimed in any one of the preceding claims, wherein the solvent is selected from the group consisting of: ethylene glycol; propylene glycol; ethanol; 1-propanol; methanol; water; and acetone.

9. An inhalation device as claimed in claim 8, wherein the solvent comprises water, included in the formulation in an amount of from 10% to 40% by weight based on the weight of the SAT.

10. An inhalation device as claimed in claim 8, wherein the solvent comprises ethylene glycol, included in an amount of from 1% to 5% by weight of the formulation.

11. An inhalation device as claimed in any one of the preceding claims, wherein the formulation comprises: from 70% to 90 % SAT; from 0.01% to 0.1% sodium carboxymethyl cellulose; from 5% to 20% water; and from 3% to 9% by weight ethylene glycol, all by weight of the total formulation.

12. An inhalation device as claimed in any one of claims 1 to 10, wherein the formulation comprises: from 70% to 90% SAT; from 0.025% to 0.1% sodium carboxymethyl cellulose; from 10% to 20% water; and from 1% to 10% by weight potassium acetate, all by weight of the total formulation.

13. An inhalation device comprising a heatable material and a formulation, wherein the formulation is a heat source which heats the heatable material in use;
wherein the formulation comprises sodium acetate trihydrate (SAT), potassium acetate and water.

## Patentansprüche

1. Inhalationsvorrichtung, umfassend ein erwärmbares Material und eine Formulierung, wobei die Formulierung eine Wärmequelle ist, die das erwärmbare Material bei Gebrauch erwärmt;
wobei die Formulierung Natriumacetattrihydrat (SAT), einen kinetischen Inhibitor und ein Lösungsmittel umfasst; und
wobei der kinetische Inhibitor ausgewählt ist aus der Gruppe bestehend aus: Natriumcarboxymethylcellulose; Gelatine; Ethylcellulose; Polyethylenglykol; Xanthangummi; Glycerin; Harnstoff; Polysorbat 20; Polysorbat 80; Polyacrylsäure; Natriumpyrophosphat; Polyacrylamid; Pullulan; Poly(vinylalkohol); und Poly(vinylacetat).

2. Inhalationsvorrichtung nach Anspruch 1, wobei die Formulierung eine Spitzentemperatur von 40°C bis 60°C oberhalb der Kristallisation aufweist.

3. Inhalationsvorrichtung nach einem der vorhergehenden Ansprüche, wobei die Formulierung ferner ein Kation umfasst, das größer als das Natriumkation ist.

4. Inhalationsvorrichtung nach Anspruch 3, wobei die Formulierung Kaliumacetat umfasst.

5. Inhalationsvorrichtung nach einem der vorhergehenden Ansprüche, wobei die Formulierung eine erhöhte Stabilität gegenüber einer Formulierung aufweist, die aus demselben SAT besteht, wenn sie den mechanischen Kräften ausgesetzt ist, die durch einen oder mehrere Stabilitätstests ausgeübt werden.

6. Inhalationsvorrichtung nach einem der vorhergehenden Ansprüche, wobei der kinetische Inhibitor ein Additiv ist, das zum Hemmen der Keimbildung dient.

7. Inhalationsvorrichtung nach einem der vorhergehenden Ansprüche, wobei der kinetische Inhibitor Natriumcarboxymethylcellulose ist, die in einer Menge von 0,01 bis 1 Gew.-% der Formulierung enthalten ist.

8. Inhalationsvorrichtung nach einem der vorhergehenden Ansprüche, wobei das Lösungsmittel ausgewählt ist aus der Gruppe bestehend aus: Ethylenglykol; Propylenglykol; Ethanol; 1-Propanol; Methanol; Wasser und Aceton.

9. Inhalationsvorrichtung nach Anspruch 8, wobei das Lösungsmittel Wasser umfasst, das in der Formulierung in einer Menge von 10 bis 40 Gew.-%, bezogen auf das Gewicht des SAT, enthalten ist.

10. Inhalationsvorrichtung nach Anspruch 8, wobei das Lösungsmittel Ethylenglykol umfasst, das in einer Menge von 1 bis 5 Gew.-% der Formulierung enthalten ist.

11. Inhalationsvorrichtung nach einem der vorhergehenden Ansprüche, wobei die Formulierung umfasst: 70 bis 90 Gew.-% SAT; 0,01 bis 0,1 Gew.-% Natriumcarboxymethylcellulose; 5 bis 20 Gew.-% Wasser; und 3 bis 9 Gew.-% Ethylenglykol, alle bezogen auf das Gewicht der gesamten Formulierung.

12. Inhalationsvorrichtung nach einem der Ansprüche 1 bis 10, wobei die Formulierung umfasst: 70 bis 90 Gew.-% SAT; 0,025 bis 0,1 Gew.-% Natriumcarboxymethylcellulose; 10 bis 20 Gew.-% Wasser; und 1 bis 10 Gew.-% Kaliumacetat, alle bezogen auf das Gewicht der gesamten Formulierung.

13. Inhalationsvorrichtung, umfassend ein erwärmbares Material und eine Formulierung, wobei die Formulierung eine Wärmequelle ist, die das erwärmbare Material bei Gebrauch erwärmt;
wobei die Formulierung Natriumacetattrihydrat (SAT), Kaliumacetat und Wasser umfasst.

## Revendications

1. Dispositif d'inhalation comprenant un matériau apte à être chauffé et une formulation, dans lequel la formulation est une source de chaleur qui chauffe le matériau apte à être chauffé lors de l'utilisation ;
dans lequel la formulation comprend du trihydrate d'acétate de sodium (SAT), un inhibiteur cinétique et un solvant ; et
dans lequel l'inhibiteur cinétique est choisi dans le groupe constitué de : carboxyméthylcellulose sodique ; gélatine ; éthylcellulose ; polyéthylèneglycol ; gomme de xanthane ; glycérol ; urée ; polysorbate 20 ; polysorbate 80 ; acide polyacrylique ; pyrophosphate de sodium ; polyacrylamide ; pullulane ; poly(alcool vinylique) ; et poly-(acétate de vinyle).

2. Dispositif d'inhalation selon la revendication 1, la formulation ayant une température de pic de 40°C à 60°C lors de la cristallisation.

3. Dispositif d'inhalation selon l'une ou l'autre des revendications précédentes, dans lequel la formulation comprend en outre un cation qui est plus gros que le cation de sodium.

4. Dispositif d'inhalation selon la revendication 3, dans lequel la formulation comprend de l'acétate de potassium.

5. Dispositif d'inhalation selon l'une quelconque des revendications précédentes, dans lequel la formulation présente une stabilité accrue par rapport à une formulation constituée du même SAT lors de l'exposition à des forces mécaniques exercées par un ou plusieurs essais de stabilité.

6. Dispositif d'inhalation selon l'une quelconque des revendications précédentes, dans lequel l'inhibiteur cinétique est un additif dont l'action est d'inhiber la nucléation.

7. Dispositif d'inhalation selon l'une quelconque des revendications précédentes, dans lequel l'inhibiteur cinétique est la carboxyméthylcellulose sodique, incluse en une quantité de 0,01 % à 1 % en poids de la formulation.

8. Dispositif d'inhalation selon l'une quelconque des revendications précédentes, dans lequel le solvant est choisi dans le groupe constitué de : éthylèneglycol ; propylèneglycol ; éthanol ; 1-propanol ; méthanol ; eau ; et acétone.

9. Dispositif d'inhalation selon la revendication 8, dans lequel le solvant comprend de l'eau, incluse dans la formulation en une quantité de 10 % à 40 % en poids sur la base du poids du SAT.

10. Dispositif d'inhalation selon la revendication 8, dans lequel le solvant comprend de l'éthylèneglycol, inclus en une quantité de 1 % à 5 % en poids de la formulation.

11. Dispositif d'inhalation selon l'une quelconque des revendications précédentes, dans lequel la formulation comprend : 70 % à 90 % de SAT ; 0,01 % à 0,1 % de carboxyméthylcellulose sodique ; 5 % à 20 % d'eau ; et 3 % à 9 % en poids d'éthylèneglycol, tous en poids de la formulation totale.

12. Dispositif d'inhalation selon l'une quelconque des revendications 1 à 10, dans lequel la formulation comprend : 70 % à 90 % de SAT ; 0,025 % à 0,1 % de carboxyméthylcellulose sodique ; 10 % à 20 % d'eau ; et e 1 % à 10 % en poids d'acétate de potassium, tous en poids de la formulation totale.

13. Dispositif d'inhalation comprenant un matériau apte à être chauffé et une formulation, dans lequel la formulation est une source de chaleur qui chauffe le matériau apte à être chauffé lors de l'utilisation ;
dans lequel la formulation comprend du trihydrate d'acétate de sodium (SAT), de l'acétate de potassium et de l'eau.
